# DEMANDE DE BREVET EUROPEEN

(11) **EP 1 481 646 A1**
(43) Date de publication de la demande: **01.12.2004**
(21) Numéro de dépôt: 04007305.8
(22) Date de dépôt: 26.03.2004
(51) Int. Cl.: A61C 8/00

(54) **Dispositif d'implant dentaire**

(30) Priorité: 26.05.2003 FR 0306332
(71) Demandeur: Medical Production S.A., 74703 Sallanches Cedex (FR)
(72) Inventeur: Battisti, Alain, 75012 Paris (FR)
(74) Mandataire: Arbousse-Bastide, Jean-Claude Philippe

(57) **Abrégé**

Dispositif d'implant dentaire du type comprenant d'une part un corps d'implant (1) muni d'un filetage externe (10), dans l'extrémité proximale duquel est pratiqué un taraudage interne (11) et d'autre part un préhenseur (2) comportant une tige de saisie (20) dudit corps d'implant (1) pour son vissage dans un os munie d'un embout de vissage (21).

L'extrémité proximale du corps d'implant (1) comprend des moyens de liaison (13,13') avec le préhenseur (2) permettant d'une part de maintenir ledit corps d'implant (1) attaché audit préhenseur (2) durant son transport et d'autre part à permettre la transmission d'un couple au corps d'implant (1) au moyen dudit préhenseur (2) de manière à pouvoir visser ledit corps d'implant (1) dans un os.

## Description

La présente invention a pour objet, dans le domaine médical, un dispositif d'implant dentaire.

On connaît des implants à usage dentaire prévus pour être insérés à l'aide d'un outil de serrage ou préhenseur, dans le tissu osseux de la mandibule ou du maxillaire. Les implants sont généralement constitués d'un corps d'implant fileté extérieurement pour son vissage dans l'os et taraudé intérieurement à son extrémité proximale pour la solidarisation d'une pièce dite pilier ou faux-moignon prolongeant vers le haut ladite extrémité du corps de l'implant en vue de la fixation d'une prothèse dentaire. La saisie du corps d'implant au moyen de l'outil de serrage est réàlisée à l'aide d'une pièce intermédiaire ou connecteur, susceptible d'être solidarisée à l'extrémité proximale du corps d'implant permettant de maintenir ce dernier attaché au préhenseur durant son transport jusqu'à la zone d'implantation.

Toutefois, l'utilisation de pièces de connexion intermédiaires allonge les temps de pose de l'implant et augmente le coût des dispositifs d'implants.

La présente invention a pour but de remédier à ces inconvénients en proposant un dispositif d'implant ne comportant plus de pièces intermédiaires, ce qui simplifie l'opération de saisie du corps d'implant et diminue son temps de pose et son prix de revient.

Le dispositif d'implant dentaire selon la présente invention est du type comprenant d'une part un corps d'implant muni d'un filetage externe, dans l'extrémité proximale duquel est pratiqué un taraudage interne et d'autre part un préhenseur comportant une tige de saisie dudit corps d'implant pour son vissage dans l'os munie d'un embout de vissage et se caractérise essentiellement en ce que l'extrémité proximale du corps d'implant comprends des moyens de liaison avec le préhenseur permettant d'une part de maintenir ledit corps d'implant attaché audit préhenseur durant son transport et d'autre part la transmission d'un couple au corps d'implant au moyen dudit préhenseur de manière à pouvoir visser ledit corps d'implant dans un os.

Le moyen de liaison du corps d'implant permettant la transmission d'un couple à ce dernier à l'aide du préhenseur se présentera sous la forme d'une empreinte creuse ou d'un moyen d'entraînement externe coopérant avec un embout de vissage adapté.

Dans un premier mode de réalisation de la présente invention le taraudage interne du corps d'implant comporte une empreinte creuse et l'embout de vissage est adapté pour être partiellement introduit dans ladite empreinte complémentaire de manière d'une part à assurer la liaison maintenant ledit corps d'implant attaché au préhenseur au cours de son transport et d'autre part à permettre la transmission d'un couple pour le vissage du corps d'implant dans l'os. L'embout de vissage pourra se présenter sous la forme d'un embouts plat et le taraudage comportera deux fentes longitudinales, diamétralement opposées, destinées chacune à recevoir un côté longitudinal dudit embout établissant une liaison entre le préhenseur et le corps d'implant pour son vissage dans un os. La partie plate de l'embout sera évasée de manière à créer une liaison entre le corps d'implant et le préhenseur permettant de maintenir ledit corps d'implant attaché au préhenseur pour son transport.

De manière à faciliter l'insertion de l'embout de vissage dans le corps d'implant, celui-ci comportera à son extrémité un guide d'insertion tel que par exemple une pièce cylindrique de diamètre inférieur au diamètre interne du taraudage pratiqué dans l'extrémité proximale du corps d'implant et solidarisé, dans l'axe du préhenseur, au bord d'extrémité de la partie plate dudit embout de vissage.

Dans un deuxième mode de réalisation de la présente invention l'entraînement du corps d'implant pour son vissage dans un os est réalisé au moyen d'un embout de vissage en forme de clé à pipe et l'extrémité proximale du corps d'implant comporte une pièce d'entraînement externe hexagonale ou carrée entourant l'orifice d'entrée du taraudage pratiqué dans ladite extrémité proximale. L'empreinte creuse, complémentaire du moyen d'entraînement hexagonale ou carré, pratiquée dans l'embout de vissage comportera axialement une béquille destinée à venir s'engager dans le taraudage pratiqué dans l'extrémité proximale du corps d'implant de manière à empêcher le basculement de la clé à pipe par rapport au corps d'implant, ladite béquille étant de préférence de forme cylindrique et possédant un diamètre légèrement inférieur au diamètre interne dudit taraudage.

Les avantages et les caractéristiques de la présente invention ressortiront plus clairement de la description qui suit et qui se rapporte au dessin annexé, lequel en représente un mode de réalisation non limitatif.
- la figure 1 représente une vue en perspective partielle du dispositif d'implant selon la présente invention avant introduction de l'embout de vissage dans le corps d'implant
- la figure 2 représente une vue en perspective partielle du dispositif d'implant avec l'embout de vissage introduit dans le corps d'implant en vue de son vissage dans un os
- la figure 3 représente une vue de profil du corps d'implant dans un premier mode de réalisation des moyens de liaison
- la figure 4 représente une vue en plan de l'extrémité proximal du corps d'implant comportant le taraudage
- la figure 5 représente une vue de profil du préhenseur dans un premier mode de réalisation des moyens de liaison
- la figure 6 représente une vue en plan de l'embout de vissage du préhenseur représenté à la figure 5
- la figure 7 représente une vue de profil du corps d'implant dans un deuxième mode de réalisation des moyens de liaison et de l'embout de vissage en forme de clé à pipe.
- la figure 8 représente une vue en plan de l'extrémité proximale du corps d'implant représenté à la figure 7

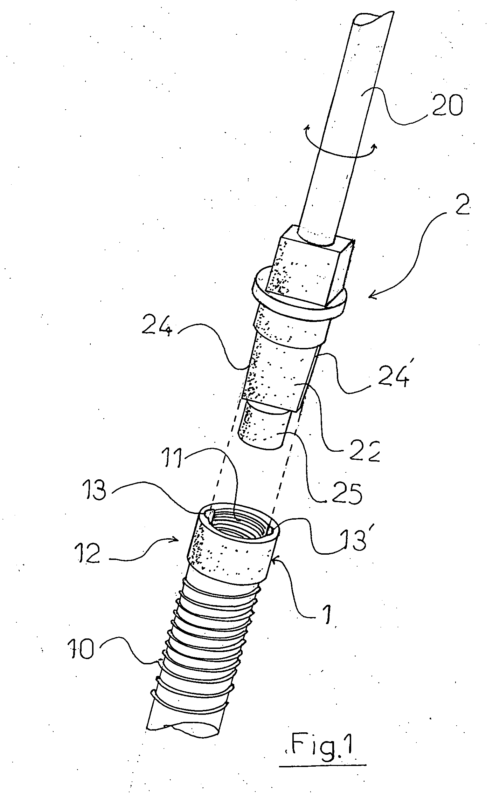

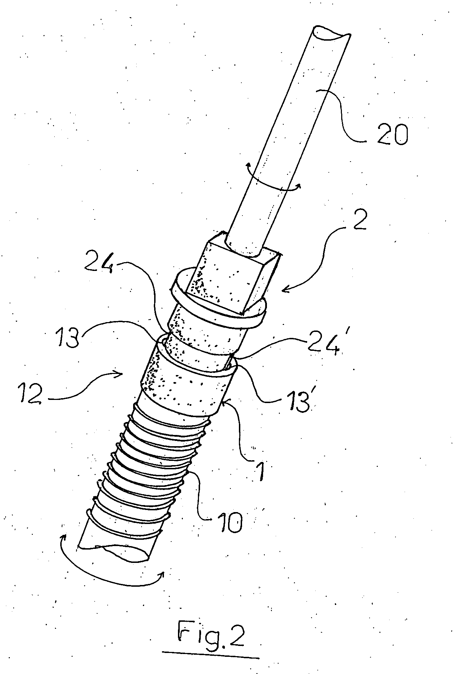

Si on se réfère à la figure 1 et à la figure 2 on peut voir qu'un dispositif d'implant dentaire selon la présente invention est constitué d'un corps d'implant 1 et d'un préhenseur 2 destiné à saisir ledit corps d'implant en vue de son vissage dans un logement osseux.

Le corps d'implant 1 présente une forme cylindrique comportant extérieurement un filetage 10 pour son implantation par vissage dans un os tandis qu'un taraudage 11 est pratiqué axialement dans l'extrémité proximale 12 du corps d'implant 1. On peut voir également que le taraudage 11 comporte deux fentes longitudinales 13,13' diamétralement opposées formant des espaces de liaison avec le préhenseur 2.

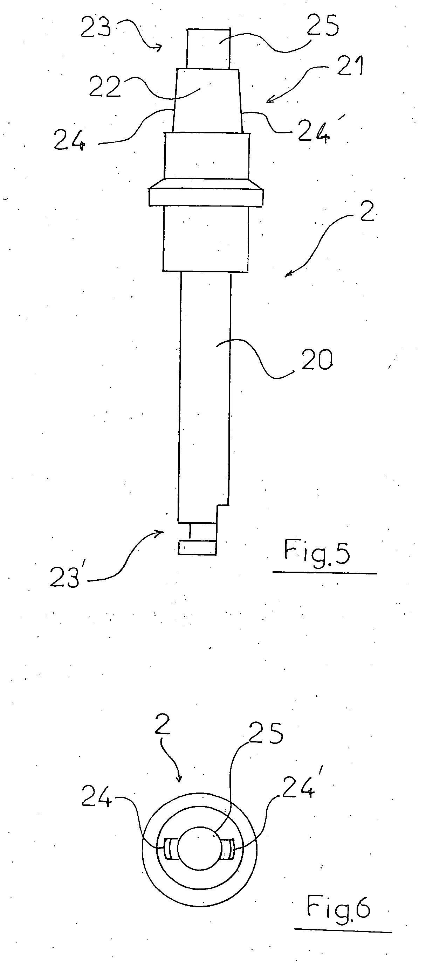

Si on se réfère également à la figure 5 on peut voir que le préhenseur 2 est constitué d'une tige 20 munie d'un embout de vissage 21 comprenant une partie plate 22 qui est destinée à être introduite dans le taraudage 11 du corps d'implant 1 (Fig.2) dans l'axe des deux fentes 12,12' recevant chacune respectivement l'un des deux côtés longitudinaux 24,24' de la partie plate 22 ce qui a pour effet de créer une liaison permettant d'une part le vissage du corps d'implant 1 au moyen du préhenseur 2 et d'autre part, du fait de la forme évasée de la partie plate 22, de maintenir attaché le corps d'implant 1 à l'extrémité du préhenseur 2 sans utiliser, à l'instar des dispositifs actuels, une pièce de connexion intermédiaire pour son transport.

Par ailleurs, de manière à faciliter l'engagement dans l'axe de l'embout de vissage 21 celui-ci comprend à son extrémité libre une partie cylindrique 25 prolongeant axialement la tige du préhenseur 2 à la base de la partie plate 22 de l'embout 21 formant ainsi un guide d'insertion de ce dernier dans le corps d'implant 1.

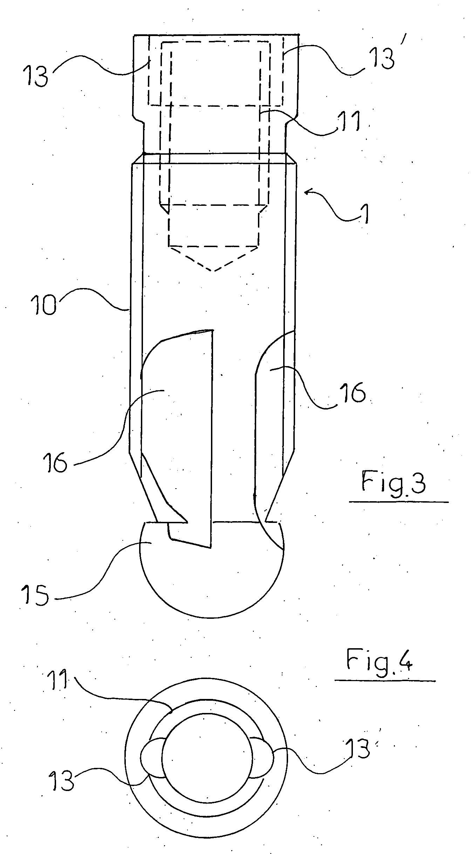

Si on se réfère maintenant à la figure 3 on peut voir que le corps d'implant se termine à son extrémité distale par une partie 15 de forme sphérique qui a pour fonction de rendre l'implantation du corps d'implant dans l'os moins, douloureuse pour le patient. La figure 3 montre également la présence d'échancrures 16 pratiquées longitudinalement dans la partie distale du corps d'implant 1 facilitant le vissage dans l'os du corps d'implant 1 et qui se prolonge jusque dans la partie sphérique 15.

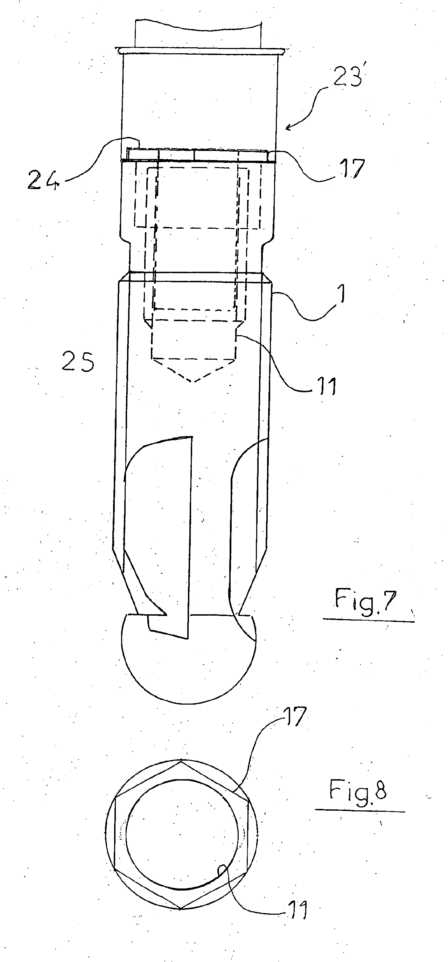

Si on se réfère à la figure 7 et à la figure 8 on peut voir que dans un autre mode de réalisation des moyens de liaison le corps d'implant 1 comporte à son extrémité proximale une pièce d'entraînement externe 17 de forme hexagonale destiné à coopérer avec un embout de vissage 23' en forme de clé à pipe. Le diamètre interne de la clé à pipe sera sensiblement égale au diamètre de la tête hexagonale 17 de manière à réaliser une liaison étroite permettant de maintenir attaché corps d'implant 1 au préhenseur 2 durant son , transport. En outre pour éviter un basculement de l'embout de vissage l'empreinte creuse 24' pratiquée dans ce dernier comporte axialement une béquille 25' venant s'engager dans le taraudage 11 pratiquée dans l'extrémité proximale du corps d'implant 1, laquelle béquille 25' présente une forme cylindrique de diamètre légèrement inférieur au diamètre interne du taraudage 11.

Le dispositif selon la présente invention permet donc à l'aide d'une seule connexion entre le préhenseur 2 et le corps d'implant 1 de permettre d'une part la saisie du corps d'implant 1 par le préhenseur 2 pour son transport et d'autre part d'obtenir un couple de vissage au moyen du préhenseur 2 pour l'implantation du corps d'implant 1 dans un os.

## Revendications

1. Dispositif d'implant dentaire du type comprenant d'une part un corps d'implant (1) muni d'un filetage externe (10), dans l'extrémité proximale duquel est pratiqué un taraudage interne (11) et d'autre part un préhenseur (2) comportant une tige de saisie (20) dudit corps d'implant (1) pour son vissage dans un os munie d'un embout de vissage (21) **caractérisé en ce que** l'extrémité proximale du corps d'implant (1) comprend des moyens de liaison (13,13',17) avec le préhenseur (2) permettant d'une part de maintenir ledit corps d'implant (1) attaché audit préhenseur (2) durant son transport et d'autre part à permettre la transmission d'un couple au corps d'implant (1) au moyen dudit préhenseur (2) de manière à pouvoir visser ledit corps d'implant (1) dans un os.

2. Dispositif selon la/ revendication 1 **caractérisé en ce que** le moyen de liaison du corps d'implant (1) permettant la transmission d'un couple à ce dernier à l'aide du préhenseur (2) est une empreinte creuse (13,13') ou un moyen d'entraînement externe (17).

3. Dispositif d'implant dentaire selon la revendication 2 **caractérisé en ce que** le taraudage interne (11) du corps d'implant (1) comporte une empreinte creuse (13,13') et **en ce que** ledit embout (21) est adapté pour être partiellement introduit dans ladite empreinte (13,13') complémentaire de manière d'une part à assurer une liaison maintenant le corps d'implant (1) attaché au préhenseur (2) au cours de son transport et d'autre part à permettre le vissage du corps d'implant (1) dans l'os.

4. Dispositif selon la revendication 3 **caractérisé en ce que** l'embout de vissage (21) est un embout plat et le taraudage (11) comporte deux fentes longitudinales (13,13'), diamétralement opposées, destinées chacune à recevoir un côté longitudinal (24,24') dudit embout (21) établissant une liaison entre le préhenseur (2) et le corps d'implant (1) pour son vissage dans un os et **en ce que** la partie plate (22) de l'embout (21) est évasée de manière à créer une liaison entre le corps d'implant (1) et le préhenseur (2) permettant de maintenir ledit corps (1) attaché au préhenseur (2) pour son transport.

5. Dispositif selon la revendication 3 ou la revendication 4 **caractérisé en ce que** l'embout (21) comporte à son extrémité un guide d'insertion (24) de manière à faciliter l'insertion dudit embout (21) dans le corps d'implant (1).

6. Dispositif selon la revendication 5 **caractérisé en ce que** le guide d'insertion est une pièce cylindrique de diamètre inférieur au diamètre interne du taraudage pratiqué dans le corps d'implant (1) et solidarisé au bord d'extrémité de la partie plate (22) de l'embout de vissage dans l'axe du préhenseur (2).

7. Dispositif selon la revendication 2 **caractérisé en ce que** l'entraînement du corps d'implant (1) pour son vissage dans un os est réalisé au moyen d'un embout de vissage (23') en forme de clé à pipe et **en ce que** l'extrémité proximale du corps d'implant (1) comporte une pièce d'entraînement externe hexagonale (17) ou carrée entourant l'orifice d'entrée (18) du taraudage (11) pratiqué dans ladite extrémité proximale.

8. Dispositif selon la revendication 7 **caractérisé en ce que** l'empreinte creuse (24') pratiquée dans l'embout de vissage en forme de clé à pipe comporte axialement une béquille (25') destinée à venir s'engager dans le taraudage (11) pratiquée dans l'extrémité proximale du corps d'implant (1), ladite béquille (25') possédant un diamètre légèrement inférieur au diamètre interne dudit taraudage (11).

9. Dispositif selon l'une quelconque des revendications précédentes **caractérisé en ce que** le corps d'implant (1) se termine à son extrémité distale par une partie (15) de forme sphérique qui a pour fonction de rendre l'implantation du corps d'implant dans l'os moins douloureuse pour le patient.

10. Dispositif selon la revendication 9 **caractérisé en ce que** des échancrures (16) sont pratiquées longitudinalement dans la partie distale du corps d'implant (1) et **en ce que** lesdites échancrures se prolongent jusque dans la partie sphérique (15).
